**Europäisches Patentamt**

**European Patent Office**

**Office européen des brevets**

(11) Veröffentlichungsnummer: **0 326 930 B1**

# EUROPÄISCHE PATENTSCHRIFT

(45) Veröffentlichungstag der Patentschrift: **23.03.94**

(51) Int. Cl.⁵: **G11B 11/10**, G11B 13/04

(21) Anmeldenummer: **89101305.4**

(22) Anmeldetag: **26.01.89**

(54) **Flächenförmiges, mehrschichtiges magneto-optisches Aufzeichnungsmaterial.**

(30) Priorität: **02.02.88 DE 3803000**

(43) Veröffentlichungstag der Anmeldung:
**09.08.89 Patentblatt 89/32**

(45) Bekanntmachung des Hinweises auf die Patenterteilung:
**23.03.94 Patentblatt 94/12**

(84) Benannte Vertragsstaaten:
**DE FR GB NL**

(56) Entgegenhaltungen:
**EP-A- 0 233 062**
**EP-A- 0 326 933**

**PATENT ABSTRACTS OF JAPAN, Band 9, Nr. 122 (P-359)[1845], 28. Mai 1985; & JP-A-60 7632**

(73) Patentinhaber: **BASF Aktiengesellschaft**
**Carl-Bosch-Strasse 38**
**D-67063 Ludwigshafen(DE)**

(72) Erfinder: **Steininger, Helmut, Dr.**
**Dr.-Ernst-Kilb-Weg 15**
**D-6520 Worms 26(DE)**

## Beschreibung

Die vorliegende Erfindung betrifft das neue, flächenförmige, mehrschichtige magneto-optische Aufzeichnungsmaterial mit

(A) einem optisch transparenten dimensionsstabilen Träger und mit

(B) einer thermisch veränderbaren, aus einer amorphen reinen Lanthanid-Übergangsmetall-Legierung aufgebauten Aufzeichnungsschicht, welche - zumindest auf der dem Träger (A) abgewandten Seite - eine bis zu 20 nm dicke, neben den Bestandteilen der Lanthanid-Übergangsmetall-Legierung lediglich noch zwei der Elemente Kohlenstoff, Sauerstoff und Stickstoff enthaltende Oberflächenzone aufweist.

Flächenförmige, mehrschichtige magneto-optische Aufzeichnungsmaterialien mit einem optisch transparenten dimensionsstabilen Träger (A) und mit einer thermisch veränderbaren Aufzeichnungsschicht (B) aus einer amorphen Lanthanid-Übergangsmetall-Legierung sind beispielsweise aus den Patentschriften US-A-4 612 068, US-A-4 126 494, US-A-4 152 486, GB-A-2 071 696, US-A-4 693 934, GB-A-2 175 160, DE-B-3 317 101, US-A-4 695 510, EP-A-0 233 034, US-A-4 684 454, US-A-4 670 356, US-A-4 670 353, EP-A-0 229 292 bekannt.

Diese bekannten Aufzeichnungsmaterialien dienen dem Aufzeichnen oder Schreiben von Daten mit Hilfe impulsmodulierter Laserstrahlen, welche auf die Aufzeichnungsschichten (B) fokussiert sind und/oder senkrecht auf diese auftreffen.

Beim Aufzeichnen oder Schreiben von Daten wird an die Aufzeichnungsmaterialien ein externes magnetisches Hilfsfeld angelegt, dessen Feldlinien senkrecht zur Oberfläche der Aufzeichnungsschichten (B) ausgerichtet sind, oder aber die Aufzeichnungsschichten (B) weisen ein entsprechend ausgerichtetes schichtimmanentes (intrinsisches) Magnetfeld auf.

Bekanntermaßen werden die aus amorphen ferrimagnetischen Lanthanid-Übergangsmetall-Legierungen bestehenden, senkrecht zu ihrer Oberfläche magnetisierten Aufzeichnungsschichten (B) beim Einschreiben der Daten durch den Laserstrahl in der Auftreffstelle erwärmt. Durch die Erwärmung nimmt die Koerzitivfeldstärke $H_c$ der Legierungen ab. Unterschreitet die Koerzitivfeldstärke $H_c$ bei einer von der jeweils verwendeten Legierung abhängigen kritischen Temperatur die Feldstärke des anliegenden (externen) magnetischen Hilfsfeldes oder des intrinsischen Feldes, so entsteht in der Auftreffstelle ein Bereich, der eine der ursprünglichen Richtung entgegengesetzte Magnetisierungsrichtung aufweist. Ein solcher Bereich wird auch als "spot" bezeichnet.

Die eingeschriebenen Daten können im übrigen durch gezieltes lokales Erhitzen der Aufzeichnungsschicht (B) z.B. mittels eines Laserstrahls bei gleichzeitiger Einwirkung eines externen oder eines intrinsischen magnetischen Feldes, dessen Feldlinien senkrecht zur Oberfläche der Aufzeichnungsschicht (B) ausgerichtet sind, bei Bedarf gelöscht werden, wonach man neue Daten einschreiben kann, D.h., der Schreibvorgang ist reversibel.

Für das Lesen der Daten verwendet man linear polarisiertes Licht eines kontinuierlich emittierenden Dauerstrichlasers, dessen Lichtleistung nicht dazu ausreicht, das Material über die kritische Temperatur hinaus zu erwärmen. Dieser Laserstrahl wird entweder von der Aufzeichnungsschicht (B) selbst oder von einer hinter ihr angeordneten Reflektionsschicht reflektiert, wobei es zu einer Wechselwirkung zwischen den magnetischen Momenten in der Aufzeichnungsschicht und dem magnetischen Vektor der Laserlichtwelle kommt. Durch diese Wechselwirkung wird die Ebene der Polarisation $\vec{E}$ des Laserlichts, welches von einem "spot" oder von einer dahinter liegenden Reflektionsschicht reflektiert wird, gegenüber der ursprünglichen Ebene um einen kleinen Winkel gedreht. Geschieht diese Drehung der Ebene der Polarisation $\vec{E}$ bei der Reflektion des Lichts an der Aufzeichnungsschicht selbst, so bezeichnet man dies als Kerr-Effekt und den Drehwinkel demnach als Kerr-Drehwinkel; wird dagegen die Ebene beim zweimaligen Durchgang des Lichts durch die Aufzeichnungsschicht gedreht, so spricht man vom Faraday-Effekt und vom Faraday-Drehwinkel.

Diese Drehung der Ebene der Polarisation $\vec{E}$ des vom Aufzeichnungsmaterial reflektierten Laserlichts kann mit Hilfe geeigneter optischer und elektronischer Geräte gemessen und in Signale umgewandelt werden.

Wenn bei den bekannten Aufzeichnungsmaterialien der Faraday-Effekt ausgenutzt wird, so müssen diese notwendigerweise eine Reflektionsschicht enthalten, da die Aufzeichnungsschichten (B) als solche lichtdurchlässig sind. Überdies müssen Interferenzschichten vorhanden sein, um störende Beugungserscheinungen zu verhindern.

Der Schutz vor Korrosion ist bei den in Rede stehenden bekannten Aufzeichnungsmaterialien von grundlegender Bedeutung, weil deren Aufzeichnungsschichten (B) äußerst schnell durch Wasser und/oder Luftsauerstoff zerstört werden, was den Totalverlust der darin eingeschriebenen Daten zur Folge hat. Es hat deshalb nicht an Versuchen gefehlt, die Aufzeichnungsschichten (B) vor Korrosion zu schützen:
So ist beispielsweise aus der DE-A-33 35 689 ein Aufzeichnungsmaterial bekannt, dessen Aufzeichnungsschicht (B) 20 bis 100 nm dick ist. Auf ihrer dem Träger (A) abgewandten Seite liegen der Aufzeichnungsschicht (B) drei weitere Schichten auf, von denen jede einzelne eine definierte Funktion erfüllt. So besteht die erste Schicht aus einem Material mit hohem Brechungsindex von 2,0 und mehr, wie etwa Titan-, Cer-, Antimon-, Wolfram-, Silizium-, Wismut- oder Cadmiumoxid, und dient als Interferenz-Schicht. Die zweite Schicht besteht aus Metallen wie Kupfer, Silber, Chrom, Aluminium, Rhodium, Gold oder Nickel und stellt eine Reflektionsschicht dar. Die oberste Schicht wird als Antioxidationsschicht bezeichnet und besteht aus Magnesium-, Aluminium-, Silicium-, Titan- oder Thoriumoxid.

Einen vergleichbaren Aufbau weist das aus der DE-A-35 34 571 bekannte Aufzeichnungsmaterial auf. Hierbei besteht die erste der auf der Aufzeichnungsschicht (B) aufgebrachten Schichten aus einem Gemisch aus Siliciumcarbid und -nitrid oder Siliciumcarbid und Aluminiumnitrid und sie dient sowohl als Schutzschicht als auch als Interferenzschicht. Als zweite Schicht kommt eine reflektierende Schicht aus einem Metall wie Kupfer, Aluminium oder Gold in Betracht. Darüber kann eine Antikorrosionsschicht angeordnet sein. Das Aufzeichnungsmaterial kann weitere Hilfsschichten wie eine Interferenzschicht aus Siliciummonoxid, Magnesiumfluorid oder Niob-, Tantal- oder Aluminiumoxid oder Aluminium- oder Siliciumnitrid enthalten.

Darüber hinaus geht aus der DE-A-35 00 314 ein Aufzeichnungsmaterial mit einer sowohl als Antikorrosionsschicht als auch als Interferenzschicht dienenden Schicht aus einem Oxid-Nitrid-Gemisch hervor.

Die bekannte Kombination aus einer Interferenzschicht, einer Reflektionsschicht und einer Antioxidationsschicht ist indes nicht als eine einzige, aus mehreren separaten Lagen zusammengesetzte Antikorrosionsschicht aufzufassen, weil ihr Aufbau und ihre Zusammensetzung nicht ausschließlich von der Antikorrosionswirkung sondern in der Hauptsache von den anderen Funktionen bestimmt werden.

Hinsichtlich der Antikorrosionswirkung weist die bekannte Kombination Nachteile auf. Insbesondere läßt ihre Wirkung als Sauerstoffsperre zu wünschen übrig, sofern sie nicht auf der Luftseite eine vergleichsweise dicke Schicht aus beispielsweise Aluminiumoxid enthält. Außerdem ergeben sich aus der nach anderen Gesichtspunkten getroffenen Auswahl der Komponenten der übrigen Schichten Nachteile hinsichtlich der Haftung der Schichten aufeinander, der Haltbarkeit, der inneren Spannung oder der mechanischen Festigkeit. So kann eine bekannte Kombination, welche hinsichtlich der Interferenz und Reflektion optimal sein mag, eine geringe Antikorrosionswirkung aufweisen. Oder aber ihre Antikorrosionswirkung ist zwar befriedigend, indessen läßt ihre Haltbarkeit zu wünschen übrig. Wählt man dann Komponenten, welche eine besonders harte obere Schicht liefern, kann die bekannte Schichtkombination insgesamt so spröde werden, daß sie bei geringer mechanischer Beanspruchung zerspringt. Überdies können innere Spannungen darin Risse hervorrufen. All dies ist der Antikorrosionsschutzwirkung abträglich.

Es bestand deshalb der Zwang, die bislang bekannten Schichtkombinationen bezüglich ihrer Antikorrosionswirkung über ihre Herstellung, ihren Schichtaufbau und/oder ihre stoffliche Zusammensetzung weiter zu verbessern.

So geht aus der DE-A-35 28 701 ein Aufzeichnungsmaterial hervor, dessen Aufzeichnungsschicht (B) auf ihrer dem Träger (A) abgewandten Seite von einer Antikorrosionsschicht aus Wolfram-, Bor-, Molybdän-, Hafnium-, Niob-, Titan-, Chrom-, Vanadin-, Tantal- oder Siliciumcarbid bedeckt ist.

Aus der US-A-4 680 742 ist ein Aufzeichnungsmaterial bekannt, dessen Interferenzschicht aus Siliciumnitrid zwischen dem Träger (A) und der Aufzeichnungsschicht (B) auch hinsichtlich der Antikorrosionswirkung durch die Zugabe von Yttrium, Lanthan, Cer, Titan, Zirkon, Chrom, Molybdän, Antimon, Wismut, Silicium, Germanium, Zinn, Blei, Aluminium, Zink oder Cadmium oder deren Oxide, Nitride, Sulfide und Silicide verbessert wurde. Diese Zusätze sind im Siliciumnitrid in einer Menge von 0,1 bis 20 Mol%, insbesondere 4 bis 20 Mol% enthalten.

Desweiteren ist aus der EP-A-0 233 062 ein Aufzeichnungsmaterial bekannt, dessen Aufzeichnungsschicht (B) zumindest auf einer Seite mit einer Schutzschicht oder Antikorrosionsschicht bedeckt ist, welche im wesentlichen aus einem Material aus wenigstens drei kovalent gebundenen Komponenten besteht, die man aus der Gruppe Silicium, Aluminium, Sauerstoff und Stickstoff ausgewählt hat.

Überdies geht aus der EP-A-0 231 672 ein Aufzeichnungsmaterial hervor, dessen Aufzeichnungsschicht (B) zumindest auf der dem Träger (A) zugewandten Seite mit einer Schutzschicht oder Antikorrosionsschicht bedeckt ist, welche man durch gemeinsames Abscheiden von

i) La, Ce, Pr, Nd, Pr, Sm, Eu, Gd, Tb, Dy, Ho, Er, Tm, Yb oder Lu und

ii) $SiO_2$, $Al_2O_3$, CaO, $La_2O_3$, MgO, $Sb_2O_3$, SiO, $SnO_2$, $ZrO_2$, ZnS, CdS, PbS, $SbS_3$, $AlF_3$, $CaF_2$, $CeF_3$, $MgF_2$, $NaAlF_6$, NaF, LiF, $NaF_3$, $PbF_2$, $ThF_4$, AlN, $Si_3N_4$, TiN, TiC, SiC, $Cr_3C_2$, $Mo_2C$ oder WC

aus der Gasphase hergestellt hat.

Darüber hinaus wird in der Europäischen Patentanmeldung EP-A-0 291 847 eine 30 bis 250 nm dicke Antikorrosionsschicht beschrieben, welche aus zwei oder mehr Komponenten besteht, die in vier oder mehr separaten Lagen aus jeweils einer Komponente vorliegen. Hierbei wird mindestens eine der Komponenten

EP 0 326 930 B1

aus der Gruppe der Elemente Bor, Aluminium, Silicium, Titan, Zirkon, Hafnium, Vanadin, Niob, Tantal, Chrom, Molybdän und Wolfram und mindestens eine andere Komponente aus der Gruppe der Carbide, Nitride und Oxide dieser Elemente ausgewählt. Desweiteren bestehen direkt benachbarte Lagen stets aus voneinander verschiedenen Komponenten.

In der JP-A-607 632 ist ein photothermopmagnetisches Aufzeichnungsmedium gezeigt, bei dem die Aufzeichnungsschicht aus einer Legierung mit den Elementen Gadolinium, Terbium, Eisen und Kohlenstoff mit einem Anteil zwischen 0,1 und 30 atom % besteht. Die Antikorrosionswirkung wird durch den Kohlenstoff und gegebenenfalls Stickstoff verbessert, ohne daß die magnetischen Eigenschaften der Aufzeichnungsschicht beeinträchtigt werden.

Trotz all dieser Variationen im Herstellverfahren, im Schichtaufbau und/oder in der stofflichen Zusammensetzung der Antikorrosionsschichten ist es nicht gelungen, die Lochfraßkorrosion ("pinhole corrosion") in den Aufzeichnungsschichten (B) sicher und allzeit wirksam zu unterdrücken. Zwar konnte mit Hilfe der in der Europäischen Patentanmeldung EP-A-0 291 847 beschriebenen Antikorrosionsschicht ein bedeutsamer Fortschritt hinsichtlich des Schutzes der Aufzeichnungsschicht (B) vor Sauerstoff und Wasser erzielt werden, indessen erzwingen die gestiegenen Anforderungen der Praxis an die Aufzeichnungs- und Wiedergabequalität sowie an die Lebensdauer der Aufzeichnungsmaterialien eine stete Weiterentwicklung, insbesondere um die Lochfraßkorrosion in den Aufzeichnungsschichten (B) wirksam zu unterbinden.

Aufgabe der vorliegenden Erfindung ist es, ein neues, flächenförmiges, mehrschichtiges magneto-optisches Aufzeichnungsmaterial mit

(A) einem optisch transparenten dimensionsstabilen Träger und mit
(B) einer thermisch veränderbaren, aus einer amorphen Lanthanid-Übergangsmetall-Legierung aufgebauten Aufzeichnungsschicht

zu finden, welches die Nachteile des Standes der Technik nicht mehr aufweist.

Demgemäß wurde das eingangs definierte, flächenförmige, mehrschichtige magneto-optische Aufzeichnungsmaterial gefunden, welches im folgenden kurz als "erfindungsgemäßes Aufzeichnungsmaterial" bezeichnet wird.

Im Rahmen der vorliegenden Erfindung werden unter dem Begriff "flächenförmig" alle Raumformen zusammengefaßt, deren Dicke erheblich geringer ist als ihre Länge und Breite. Die erfindungsgemäßen Aufzeichnungsmaterialien können demnach band-, platten- oder scheibenförmig sein, wobei die scheibenförmigen - welche man im allgemeinen als "Datenplatten" oder "Disks" bezeichnet - von Vorteil sind.

Der wesentliche Bestandteil des erfindungsgemäßen Aufzeichnungsmaterials ist die neue, thermisch veränderbare, aus einer amorphen Lanthanid-Übergangsmetall-Legierung aufgebaute Aufzeichnungsschicht (B), welche im folgenden kurz als "neue Aufzeichnungsschicht (B)" bezeichnet wird.

Die neue Aufzeichnungsschicht (B) ist ebenso wie die bislang bekannten magneto-optischen Aufzeichnungsschichten aus einer amorphen Lanthanid-Übergangsmetall-Legierung aufgebaut und sie ist 10 bis 500 nm dick. Für den Aufbau der neuen Aufzeichnungsschicht (B) kommen wie in den bekannten Fällen die Lanthanide Praseodym, Neodym, Samarium, Europium, Gadolinium, Terbium, Dysprosium und Holmium und die Übergangsmetalle Eisen und Kobalt in Betracht, wobei geeignete Mischungsverhältnisse von Lanthaniden zu Übergangsmetallen allgemein bekannt sind. Darüber hinaus können die amorphen Lanthanid-Übergangsmetall-Legierungen noch weitere Elemente wie Scandium, Yttrium, Lanthan, Vanadin, Niob, Tantal, Chrom, Molybdän, Wolfram, Mangan, Nickel, Rhenium, Ruthenium, Osmium, Rhodium, Iridium, Palladium, Platin, Kupfer, Silber, Gold, Zink, Bor, Aluminium, Gallium, Indium, Silicium, Germanium, Zinn, Blei, Phosphor, Arsen, Antimon und/oder Wismut in üblichen und bekannten Mengen enthalten.

Beispiele geeigneter Lanthanid-Übergangsmetall-Legierungen für den Aufbau der neuen Aufzeichnungsschicht (B) sind

$(Nd_{0,25-0,35}Dy_{0,05}Fe_{0,5-0,6}Co_{0,1})_{0,99}(Ti,Cr)_{0,01}$,

$Gd_{0,2-0,3}Fe_{0,7-0,8}$ , $Gd_{0,2-0,3}Co_{0,7-0,8}$,

$Tb_{0,15-0,25}Fe_{0,75-0,85}$, $Gd_{0,15-0,25}Co_{0,75-0,85}$,

$Dy_{0,18-0,28}Fe_{0,72-0,82}$, $Gd_{0,13}Tb_{0,13}Fe_{0,74}$,

$(Sm_{0,06-0,31}Tb_{0,69-0,94})_{0,15-0,35}Fe_{0,65-0,85}$,

$[(Sm_{0,1-0,26}Tb_{0,74-0,9})_{0,6}Gd_{0,4}]_{0,23}Fe_{0,77}$ oder

$(Tb_{0,25}Fe_{0,75})_{0,92}Pt_{0,08}$.

Die neue Aufzeichnungsschicht (B) weist zumindest auf der dem Träger (A) abgewandten Seite eine bis zu 20 nm dicke, Kohlenstoff, Sauerstoff und/oder Stickstoff enthaltende Oberflächenzone auf, oder aber die neue Aufzeichnungsschicht weist auf ihren beiden Seiten eine bis zu 20 nm dicke, Kohlenstoff, Sauerstoff und/oder Stickstoff enthaltende Oberflächenzone auf, wobei die beiden Oberflächenzonen der betreffenden Aufzeichnungsschicht (B) von in etwa gleicher oder gleicher Dicke, Struktur und Zusammensetzung sind. Indessen können sich die beiden Oberflächenzonen in ihrer Dicke, ihrer Struktur und/oder ihrer Zusammen-

4

setzung voneinander unterscheiden.

Unabhängig davon, ob die neue Aufzeichnungsschicht (B) eine oder zwei Oberflächenzone(n) enthält, ist die Dicke der Oberflächenzone(n) nicht höher als 20 nm, weil sich wegen des besonders vorteilhaften technischen Effekts der Oberflächenzone(n) höhere Schichtdicken erübrigen. Andererseits soll die Dicke der Oberflächenzone 0,1 nm nicht unterschreiten, weil ansonsten ihre besondere Wirkung gegen die Lochfraßkorrosion nicht mehr in vollem Umfang befriedigt. Erfindungsgemäß von Vorteil ist eine Dicke zwischen 0,5 und 20, vorzugsweise 1 bis 18 und insbesondere 2 bis 16 nm. Demnach stellt der Dickenbereich von 0,5 bis 20, vorzugsweise 1 bis 18 und insbesondere 2 bis 16 nm ein Optimum dar, innerhalb dessen die Dicke der Oberflächenzone variiert und in ihrem Aufbau, ihrer stofflichen Zusammensetzung und ihrem anwendungstechnischen Eigenschaftsprofil der jeweiligen Lanthanid-Übergangsmetall-Legierung, der Gesamtdicke der Aufzeichnungsschicht (B) und/oder den weiteren in dem erfindungsgemäßen Aufzeichnungsmaterial enthaltenen Schichten in hervorragender und dennoch einfacher Weise angepaßt werden kann.

Die Oberflächenzone der neuen Aufzeichnungsschicht (B) enthält Kohlenstoff, Sauerstoff und/oder Stickstoff, d.h. sie enthält neben den Bestandteilen der Lanthanid-Übergangsmetall-Legierung lediglich noch Kohlenstoff, Sauerstoff oder Stickstoff oder sie enthält noch Sauerstoff und Stickstoff, Sauerstoff und Kohlenstoff, Kohlenstoff und Stickstoff oder Kohlenstoff, Sauerstoff und Stickstoff. Die Oberflächenzone kann daher auch als eine Carbid-, Oxid-, Nitrid-, Oxid/Nitrid-, Oxid/Carbid-, Carbid/Nitrid- oder Carbid/Oxid/Nitrid-Zone angesehen werden. Hierbei ist die gemeinsame Verwendung von Sauerstoff und Stickstoff oder von Sauerstoff und Kohlenstoff von Vorteil, d.h. Oberflächenzonen die Sauerstoff und Stickstoff oder Sauerstoff und Kohlenstoff nebeneinander enthalten, sind erfindungsgemäß bevorzugt.

Der Kohlenstoff, Sauerstoff und/oder Stickstoff ist in der Oberflächenzone der neuen Aufzeichnungsschicht (B) gleichmäßig verteilt, d.h. die Oberflachenzone weist bezüglich der Kohlenstoff-, Sauerstoff- und/oder Stickstoffkonzentration keinen Gradienten auf. Dabei enthält die Oberflächenzone eine stöchiometrische Menge an Kohlenstoff, Stickstoff und/oder Sauerstoff, d.h. die Oberflächenzone ist eine stöchiometrisch zusammengesetzte Lanthanid-Übergangsmetall-Oxid-, -Nitrid-, -Carbid-, -Oxid/Carbid-, -Oxid/Nitrid-, -Carbid/Nitrid- oder -Carbid/Oxid/Nitrid-Zone. Oder aber die Oberflächenzone enthält substöchiometrische Mengen an Kohlenstoff, Sauerstoff und/oder Stickstoff, d.h. die Oberfläche stellt eine interstitielle Lanthanid-Übergangsmetall-Oxid-, -Nitrid-, -Carbid-, -Oxid/Carbid-, -Oxid/Nitrid-, -Carbid/Nitrid- oder -Carbid/Oxid/Nitrid-Phase dar. Erfindungsgemäß von Vorteil sind Oberflächenzonen, welche substöchiometrische Mengen an Kohlenstoff, Sauerstoff und/oder Stickstoff enthalten.

Indes kann der Kohlenstoff, Sauerstoff und/oder der Stickstoff in der Oberflächenzone ungleichmäßig verteilt sein, d.h. , daß in der Oberflächenzone bezüglich der Kohlenstoff-, Sauerstoff- und/oder der Stickstoffkonzentration ein Gradient vorhanden ist.

Sofern die Oberflächenzone Kohlenstoff, Sauerstoff oder Stickstoff enthält, folgt hieraus unmittelbar, daß die Oberflächenzone zumindest in Teilbereichen von substöchiometrischer Zusammensetzung ist oder daß in ihr kohlenstoff-, stickstoff- und sauerstofffreie Teilbereiche oder Lagen vorhanden sind.

Sofern die Oberflächenzone Sauerstoff und Stickstoff, Sauerstoff und Kohlenstoff, Kohlenstoff und Stickstoff oder Kohlenstoff, Sauerstoff und Stickstoff enthält, ist sie zumindest in Teilbereichen bezüglich einer der Konzentrationen von substöchiometrischer Zusammensetzung, wobei sie bezüglich der jeweiligen Gesamtkonzentration von stöchiometrischer oder substöchiometrischer Zusammensetzung sein kann.

Erfindungsgemäß von Vorteil sind Oberflächenzonen, welche bezüglich der jeweiligen Einzelkonzentrationen von substöchiometrischer Zusammensetzung sind und hierbei auch noch einen Konzentrationsgradienten aufweisen.

Hierbei ist es erfindungsgemäß von besonderem Vorteil, wenn eine oder mehrere der Einzelkonzentrationen von der äußeren Grenzfläche der Oberflächenzone aus bis zu ihrer inneren Grenzfläche hin abnehmen, wobei diese Abnahme der Einzelkonzentrationen kontinuierlich oder diskontinuierlich erfolgt.

Sofern die Sauerstoff- und/oder Kohlenstoff-, Kohlenstoff- und/oder Stickstoff-, Sauerstoff- und/oder Stickstoff- oder die Kohlenstoff-, Sauerstoff- und/oder Stickstoffkonzentration innerhalb einer Oberflächenzone diskontinuierlich abnimmt, hat dies zwangsweise die Ausbildung separater Lagen in der Oberflächenzone zu Folge. Bei diesen separaten Lagen handelt es sich um Lagen, welche sich in ihren Sauerstoff- und/oder Kohlenstoff-, Kohlenstoff- und/oder Stickstoff-, Sauerstoff- und/oder Stickstoff- oder in ihren Kohlenstoff-, Sauerstoff- und/oder Stickstoffkonzentrationen voneinander unterscheiden. Daneben können noch reine Lanthanid-Übergangsmetall-Lagen vorhanden sein. Die separaten Lagen können durch eine scharfe Phasengrenze voneinander getrennt sein oder aber allmählich, d.h. fließend, ineinander übergehen. Insgesamt nehmen aber eine oder mehrere der jeweiligen Einzelkonzentrationen von der äußeren Grenzfläche der Oberflächenzone aus bis zu deren inneren Grenzfläche hin ab.

Unabhängig davon, ob die Abnahme der jeweiligen Einzelkonzentrationen kontinuierlich oder diskontinuierlich erfolgt, liegen sie ab der inneren Grenzfläche der Oberflächenzone unterhalb der Nachweisgrenze der üblichen und bekannten Nachweismethoden für Kohlenstoff, Sauerstoff oder Stickstoff, d.h. die betreffenden Konzentrationen sind praktisch gleich Null.

Erfindungsgemäß von Vorteil sind außerdem Oberflächenzonen, welche bezüglich aller jeweiligen Einzelkonzentrationen von substöchiometrischer Zusammensetzung sind und hierbei auch noch Konzentrationsgradienten aufweisen, welche allerdings nicht darin bestehen, daß die jeweiligen Einzelkonzentrationen diskontinuierlich abnehmen, sondern daß die Einzelkonzentrationen sich diskontinuierlich ändern. Hierbei nehmen die jeweiligen Einzelkonzentrationen von der äußeren Grenzfläche der Oberflächenzone aus zunächst ab, dann wieder zu, um anschließend wieder abzunehmen. Diese Änderung kann innerhalb der Oberflächenzone einmal oder mehrmals erfolgen. Die Änderung kann eine der jeweiligen Einzelkonzentrationen, z.B. die Sauerstoff- oder die Stickstoffkonzentration oder alle jeweiligen Einzelkonzentrationen betreffen. Bei der diskontinuierlichen Änderung der jeweiligen Einzelkonzentration(en) innerhalb der Oberflächenzone kann die Kohlenstoff-, Sauerstoff- und/oder Stickstoffkonzentration unter die Nachweisgrenze üblicher und bekannter Nachweismethoden für Kohlenstoff, Sauerstoff und/oder Stickstoff sinken, d.h. praktisch gleich Null sein. Es versteht sich von selbst, daß hier wie in den vorstehend beschriebenen Fällen die Kohlenstoff, Sauerstoff- und/oder Stickstoffkonzentration ab der inneren Grenzfläche der Oberflächenzone in der neuen Aufzeichnungsschicht (B) praktisch gleich Null ist.

Die diskontinuierliche Änderung der Kohlenstoff-, Sauerstoff- und/oder Stickstoffkonzentration hat die Bildung separater Lagen in der Oberflächenzone zur Folge.

Hierbei kann die Änderung der Kohlenstoff-, Sauerstoff- und/oder Stickstoffkonzentration von einer Lage zur nächsten abrupt erfolgen, so daß die einzelnen Lagen durch eine scharfe Phasengrenze voneinander getrennt sind. Die Änderung der Konzentration(en) kann indes auch allmählich, d.h. fließend, erfolgen.

In beiden Fällen können sauerstoffhaltige neben sauerstofffreien Lagen vorliegen, wobei es sich bei den sauerstofffreien um kohlenstoff- und/oder stickstoffhaltige Lagen und/oder um Lanthanid-Übergangsmetall-Lagen handelt. Hierbei können die sauerstoffhaltigen Lagen eine gewisse, vergleichsweise geringe Kohlenstoff- und/oder Stickstoffkonzentration aufweisen.

Erfindungsgemäß von besonderem Vorteil ist hierbei der allmähliche, d.h. fließende Übergang von einer separaten Lage zur nächsten.

Unabhängig davon, von welcher der vorstehend beschriebenen Arten die Oberflächenzone der neuen Aufzeichnungsschicht (B) ist, und unabhängig davon, ob die neue Aufzeichnungsschicht (B) zwei dieser Oberflächenzonen aufweist, geht die neue Aufzeichnungsschicht (B) abrupt in die unmittelbar an sie angrenzende(n) Schicht(en) (C) über. Hierbei befindet sich zwischen der äußeren Grenzfläche einer Oberflächenzone und der an sie unmittelbar angrenzenden Schicht (C) eine scharfe Phasengrenze. Oder aber die neue Aufzeichnungsschicht (B) geht allmählich, d.h. fließend, in die unmittelbar an sie angrenzende(n) Schicht(en) (C) über.

Unabhängig davon, ob die neue Aufzeichnungsschicht (B) eine oder zwei der vorstehend beschriebenen Oberflächenzonen aufweist, und unabhängig davon, ob deren äußere Grenzfläche abrupt oder allmählich in die unmittelbar an sie angrenzende(n) Schicht(en) (C) übergeht, richtet sich die Dicke der Oberflächenzone(n) einer gegebenen neuen Aufzeichnungsschicht (B) stets danach, wie dick die darin enthaltene Schicht aus reiner Lanthanid-Übergangsmetall-Legierung sein muß, um das einwandfreie magneto-optische Schreiben und Lesen von Daten zu gewährleisten. Im allgemeinen reicht hierfür eine 10 bis 500 nm dicke Schicht aus reiner Lanthanid-Übergangsmetall-Legierung aus. Demgemäß ist die Dicke der Oberflächenzone(n) innerhalb der vorstehend angegebenen Dickenbereiche zwischen 0,1 und 20, vorteilhafterweise 0,5 und 20, vorzugsweise 1 bis 18 und insbesondere 2 bis 16 nm so zu wählen, daß in einer vorgegebenen neuen Aufzeichnungsschicht (B) die für das einwandfreie magneto-optische Schreiben und Lesen von Daten notwendige Mindestdicke der reinen Legierungsschicht von 10 nm nicht unterschritten wird.

Die Herstellung der neuen Aufzeichnungsschicht (B) erfolgt im Rahmen der Herstellung des erfindungsgemäßen Aufzeichnungsmaterials.

Das erfindungsgemäße Aufzeichnungsmaterial enthält neben der neuen Aufzeichnungsschicht (B) den optisch transparenten dimensionsstabilen Träger (A) als weiteren wesentlichen Bestandteil.

Vorteilhafte Träger (A) sind die üblichen und bekannten, scheibenförmigen, optisch klaren dimensionsstabilen Träger (A) eines Durchmessers von 90 oder 130 nm und einer Dicke von 1,2 mm. Sie bestehen im allgemeinen aus Glas oder aus Kunststoffen wie z.B. Polycarbonat, Polymethylmethacrylat, Polymethylpenten, Celluloseacetobutyrat oder aus Gemischen aus Poly(vinylidenfluorid) und Polymethylmethacrylat oder Polystyrol und Poly(2,6-dimethylphen-1,4-ylen-ether). Hiervon sind die Träger (A) aus Kunststoff besonders vorteilhaft.

6

Diejenige Oberfläche des Trägers (A), welche der neuen Aufzeichnungsschicht (B) zugewandt ist, kann Strukturen aufweisen.

Die Strukturen in der Oberfläche des Trägers (A) liegen im Mikrometer- und/oder Submikrometerbereich. Sie dienen der exakten Führung des Leselaserstrahls und gewährleisten ein rasches und genaues Ansprechen der Spurlagenservo- und Autofokussiereinrichtungen in den laseroptischen Schreib- und Leseköpfen der Plattenlaufwerke, d.h. sie ermöglichen oder verbessern das "tracking". Außerdem können diese Strukturen selbst Daten sein, so wie dies beispielsweise bei den bekannten Audio- oder Video-Compact-Disks der Fall ist, oder sie können der Kodierung der eingeschriebenen Daten dienen. Die Strukturen bestehen aus erhabenen Teilen und/oder aus Vertiefungen. Diese liegen in der Form von durchgehenden konzentrischen oder spiralförmigen Spurrillen oder als isolierte Hügel und/oder Löcher vor. Außerdem kann die Struktur eine mehr oder wenige glatte Wellenform haben. Den Spurrillen wird hierbei der Vorzug gegeben. Sie weisen in ihrer Querrichtung eine rechteckige sägezahnartige, eine V-förmige oder eine trapezartige Kontur auf. Ihre Vertiefungen werden im allgemeinen als "grooves" und ihre erhabenen Teile als "land" bezeichnet. Von besonderem Vorteil sind Spurrillen mit 50 bis 200 nm tiefen und 0,4 bis 0,8 $\mu$m breiten "grooves", zwischen denen jeweils ein 1 bis 3 $\mu$m breites "land" liegt.

Die Herstellung des besonders bevorzugt verwendeten Trägers (A) erfolgt in an sich bekannter Weise durch die formgebende Bearbeitung des den Träger (A) aufbauenden Kunststoffs oder Kunststoffgemischs mit Hilfe der Spritzgußtechnik unter Reinraumbedingungen, so wie dies beispielsweise in der deutschen Patentanmeldung P 37 27 093.1 [O.Z. 0050/39384] beschrieben wird.

Das erfindungsgemäße Aufzeichnungsmaterial kann neben dem Träger (A) und der neuen Aufzeichnungsschicht (B) zumindest eine weitere Schicht (C) enthalten.

So kann sich beispielsweise zwischen dem Träger (A) und der neuen Aufzeichnungsschicht (B) eine übliche und bekannte Interferenzschicht (C) aus einem optisch transparenten Material mit hohem Brechungsindex befinden. Dieses Material enthält oder besteht üblicherweise aus Oxiden und/oder Nitriden.

Desweiteren kann sich auf der dem Träger (A) abgewandten Seite der neuen Aufzeichnungsschicht (B) eine übliche und bekannte Reflektionsschicht (D) befinden, welche üblicherweise aus Metallen besteht.

Außerdem kann zwischen der neuen Aufzeichnungsschicht (B) und der Reflektionsschicht (D) eine weitere, Oxide und/oder Nitride enthaltende oder aus Oxiden und/oder Nitriden bestehende optisch transparente Schicht (C) vorhanden sein.

Überdies kann das erfindungsgemäße Aufzeichnungsmaterial auf der Seite der Reflektionsschicht (D), welche der neuen Aufzeichnungsschicht (B) abgewandt ist, eine übliche und bekannte Schutz- oder Antikorrosionsschicht (C) aufweisen, die gleichfalls Carbide, Oxide und/oder Nitride enthält oder aus Carbiden, Oxiden und/oder Nitriden besteht.

Hierbei können die zusätzlichen Schichten (C) und (D) auch aus mehreren separaten Lagen aufgebaut sein. Außerdem können die Schichten (C) röntgenamorph oder polykristallin sein.

Die Dicke dieser zusätzlichen Schichten (C) und (D) ist allgemein bekannt und kann beispielsweise dem eingangs zitierten Stand der Technik entnommen werden.

Für spezielle Anwendungszwecke kann das erfindungsgemäße Aufzeichnungsmaterial auch noch mindestens eine weitere, übliche und bekannte magnetisierbare Schicht aufweisen. Bei dieser magnetisierbaren Schicht kann es sich um eine hartmagnetische oder weichmagnetische Schicht oder um eine übliche und bekannte magneto-optische Aufzeichnungsschicht handeln. Desweiteren kommt hierfür auch die neue Aufzeichnungsschicht (B) in Betracht.

Die Herstellung dieser zusätzlichen Schichten (C) und (D) und die der weiteren magnetisierbaren Schichten erfolgt im Rahmen der Herstellung des erfindungsgemäßen Aufzeichnungsmaterials, wobei sich die Reihenfolge der einzelnen Herstellungs- oder Verfahrensschritte zwingend aus dem jeweiligen Aufbau des erfindungsgemäßen Aufzeichnungsmaterials ergibt.

Zwei der vorstehend beschriebenen erfindungsgemäßen Aufzeichnungsmaterialien können desweiteren "sandwich"-artig so miteinander verbunden werden, daß ihre Aufzeichnungsschichten (B) einander zugekehrt sind und ein gewisser Abstand zwischen ihnen herrscht. Hierfür werden die üblichen und bekannten Techniken zum Verbinden zweier Aufzeichnungsmaterialien angewandt.

Die Herstellung des erfindungsgemäßen Aufzeichnungsmaterials geht aus von dem vorstehend beschriebenen Träger (A), auf dessen eine Oberfläche die neue Aufzeichnungsschicht (B) in der gewünschten Dicke und mit dem jeweils erfindungsgemäß erforderlichen inneren Aufbau sowie gegebenenfalls die Schichten (C) und (D) und die weiteren magnetisierbaren Schichten in der gewünschten Reihenfolge, Anzahl und Dicke und mit dem jeweils gewünschten Aufbau aus der Gasphase aufgebracht werden, wonach man in der neuen Aufzeichnungsschicht (B) eine definierte, senkrecht zu ihrer Oberfläche orientierte Magnetisierung in üblicher und bekannter Weise induziert.

Hierbei erfolgt das Aufbringen der neuen Aufzeichnungsschicht (B) und das der gegebenenfalls vorhandenen weiteren Schichten mit Hilfe der üblichen und bekannten Techniken der Herstellung dünner Schichten durch Aufdampfen, reaktives Aufdampfen, Ionenplattieren ("ion-plating"), "ion cluster beam deposition" (ICB), Kathodenzerstäubung, reaktiver Kathodenzerstäubung, Magnetronkathodenzerstäubung oder reaktiver Magnetronkathodenzerstäubung, wobei man die Kathodenzerstäubungsmethoden, welche allgemein auch als "sputtering" bezeichnet werden, bevorzugt anwendet.

Bei der Kathodenzerstäubung ("sputtering") werden die entsprechenden Metalle, Carbide, Oxide, Nitride und/oder die gegebenenfalls verwendeten sonstigen Verbindungen in der gewünschten Reihenfolge und Menge im Vakuum von einer Kathode ("target") aus zerstäubt und auf dem Träger (A) oder auf einer bereits hierauf vorhandenen Schicht abgeschieden. Üblicherweise enthält hierbei das Prozeßgas ein Edelgas wie Argon.

Bei der reaktiven Kathodenzerstäubung ("reactive sputtering") werden dem Prozeßgas weitere reaktive Gase wie Wasserstoff, Kohlenwasserstoffe, Sauerstoff, Stickstoff u.a. in der gewünschten Menge zu einem geeigneten Zeitpunkt zugemischt. Hierdurch kann man durch Zerstäubung eines Metalls beispielsweise in der Gegenwart von Kohlenwasserstoffen, Sauerstoff und/oder Stickstoff im Prozeßgas direkt die betreffende Metalloxid-, -nitrid-, -carbid-, -carbidoxid-, -carbidnitrid-, -oxidnitrid- oder -carbidoxidnitridschicht abscheiden. Dabei können die Dicke, die Struktur und die Zusammensetzung der betreffenden Schicht über die Zerstäubungsrate, die Abscheiderate, den Prozeßgasdruck und die Prozeßgaszusammensetzung bekanntermaßen äußerst genau und sicher reproduzierbar eingestellt werden.

Bei der (reaktiven) Magnetronkathodenzerstäubung ["(reactive) magnetron sputtering"] befindet sich das "target" in einem Magnetfeld.

Die Herstellung der neuen Aufzeichnungsschicht (B) erfolgt vorteilhafterweise mittels der (Magnetron)-Kathodenzerstäubung, wobei man bereits bei der Herstellung der neuen Aufzeichnungsschicht (B) - zumindest auf ihrer dem Träger (A) abgewandten Seite - die bis zu 20 nm dicke, Kohlenstoff, Sauerstoff und/oder Stickstoff enthaltende Oberflächenzone erzeugt. Oder aber man erzeugt diese Oberflächenzone nach dem Aufbringen der reinen Lanthanid-Übergangsmetall-Legierungsschicht durch partielle oder vollständige Umsetzung einer bis zu 20 nm dicken Oberflächenzone mit Kohlenstoff, Sauerstoff und/oder Stickstoff.

Hierbei ist die Erzeugung der Oberflächenzone während der Herstellung der neuen Aufzeichnungsschicht (B) von ganz besonderem Vorteil, weil man in diesem Falle die betreffende Oberflächenzone elegant durch reaktive (Magnetron)Kathodenzerstäubung der ohnedies hierbei verwendeten Lanthanid-Übergangsmetall-Legierung in der Gegenwart von Kohlenwasserstoffen, Sauerstoff und/oder Stickstoff erzeugen kann. Dabei können die Verfahrensparameter in üblicher und bekannter Weise eingestellt und/oder anhand einfacher Vorversuche ermittelt werden, so daß Übergangszonen der vorstehend beschriebenen Art resultieren.

Sofern die neue Aufzeichnungsschicht (B) auch noch auf ihrer dem Träger (A) zugewandten Seite eine bis zu 20 nm dicke, Carbide, Oxide und/oder Nitride enthaltende Oberflächenzone aufweisen soll, so wird diese Oberflächenzone entweder durch

(i) Aufbringen einer bis zu 20 nm dicken Schicht aus der betreffenden Lanthanid-Übergangsmetall-Legierung in der Gegenwart von Kohlenwasserstoffen, Sauerstoff und/oder Stickstoff

oder durch

(ii) Aufbringen einer bis zu 20 nm dicken Schicht aus der betreffenden Lanthanid-Übergangsmetall-Legierung und deren nachträgliche, partielle oder vollständige Umsetzung mit Kohlenstoff, Sauerstoff und/oder Stickstoff

erzeugt, wonach man im weiteren die reine Lanthanid-Übergangsmetall-Legierung in der jeweils gewünschten Dicke abscheidet.

Hierbei ist das Aufbringen der Oberflächenzone durch den Verfahrensschritt (i) von besonderem Vorteil, wobei die Anwendung der reaktiven (Magnetron)Kathodenzerstäubung von ganz besonderem Vorteil ist.

Beispiele besonders vorteilhafter Reihenfolgen von Verfahrensschritten, welche letztlich zu unterschiedlich aufgebauten erfindungsgemäßen Aufzeichnungsmaterialien führen, d.h. Beispiele besonders vorteilhafter Herstellverfahren, sind - jeweils ausgehend von der Oberfläche des Trägers (A) - die Varianten (I) bis (IV):

Variante (I):

(I-1)   Schicht (C) durch reaktive (Magnetron)Kathodenzerstäubung,
(I-2)   neue Aufzeichnungsschicht (B) durch (Magnetron)Kathodenzerstäubung, Oberflächenzone durch reaktive (Magnetron)Kathodenzerstäubung,

(I-3)    Schicht (C) durch reaktive (Magnetron)Kathodenzerstäubung;

Variante (II):

(II-1)    Schicht (C) wie bei Variante (I),
(II-2)    neue Aufzeichnungsschicht (B) wie bei Variante (I),
(II-3)    Schicht (C) wie bei Variante (I),
(II-4)    Reflektionsschicht (D) durch (Magnetron)Kathodenzerstäubung,
(II-5)    Schicht (C) wie bei Variante (I);

Variante (III):

(III-1)    Erste Oberflächenzone der neuen Aufzeichnungsschicht (B) durch reaktive (Magnetron)-Kathodenzerstäubung,
reine Lanthanid-Übergangsmetall-Legierungsschicht durch (Magnetron)Kathodenzerstäubung,
zweite Oberflächenzone der neuen Aufzeichnungsschicht (B) durch reaktive (Magnetron)-Kathodenzerstäubung,
(III-2)    Schicht (C) wie bei Variante (I);

Variante (IV):

(IV-1)    Schicht (C) wie bei Variante (I),
(IV-2)    neue Aufzeichnungsschicht (B) wie bei Variante (III),
(IV-3)    Schicht (C) wie bei Variante (I),
(IV-4)    Reflektionsschicht (D) wie bei Variante (II),
(IV-5)    Schicht (C) wie bei Variante (I).

Die erfindungsgemäßen Aufzeichnungsmaterialien können in der üblichen Weise von der Seite des optisch transparenten dimensionsstabilen Trägers (A) her mit Hilfe eines impulsmodulierten, auf die neuen Aufzeichnungsschichten (B) fokussierten und/oder senkrecht auf diese auftreffenden Schreiblaserstrahls einer Wellenlänge λ von kleiner als 1000 nm mit Daten in Form ummagnetisierter "spots" beschrieben werden. Hiernach können die Daten mit Hilfe eines auf die beschriebenen Aufzeichnungsschichten (B) fokussierten und/oder senkrecht auf sie auftreffenden Dauerstrichlaserstrahls gelesen werden, wobei man das von den Aufzeichnungsschichten (B) selbst oder das von den Reflektionsschichten (D) reflektierte Licht erfaßt, analysiert und in Signale umwandelt. Im Falle der erfindungsgemäßen Datenplatten oder Disks können hierfür die üblichen und bekannten laseroptischen Plattenlaufwerke mit laseroptischen Köpfen, welche Halbleiterlaser enthalten, verwendet werden.

Die erfindungsgemäßen Aufzeichnungsmaterialien weisen gegenüber dem Stand der Technik besondere Vorteile auf. So haben sie eine höhere Empfindlichkeit als bekannte Aufzeichnungsmaterialien, weswegen sie mit geringerer Laserleistung beschrieben werden können. Erfindungsgemäße magneto-optische Datenplatten (Disks) können daher - bei gleicher Laserleistung - bei höheren Plattendrehzahlen beschrieben werden als bekannte Disks. Auch ihre Bitdichte ist gegenüber dem Stand der Technik deutlich erhöht. Beim Lesen liefern sie unverzerrte Signale und weisen ein Signal-Rausch-Verhältnis von mehr als 55 dB auf. Selbst nach einer Lagerzeit von mehr als 1000 Stunden bei 70°C und einer relativen Luftfeuchtigkeit von 90 % kommt es nicht zu einer Erhöhung der Bitfehlerrate ("bit error rate"), d.h. es tritt kein Informationsverlust auf.

Die erfindungsgemäßen Aufzeichnungsmaterialien weisen die neue Aufzeichnungsschicht (B) auf. Die neue Aufzeichnungsschicht (B) kann in hervorragender und dennoch einfacher Weise dem Eigenschaftsprofil der übrigen in den erfindungsgemäßen Aufzeichnungsmaterialien vorhandenen Schichten angepaßt werden, wodurch sich bislang unbekannte und/oder bislang als nicht realisierbar erachtete Möglichkeiten der Optimierung magneto-optischer Aufzeichnungsmaterialien ergeben. Insbesondere kann die neue Aufzeichnungsschicht (B) ganz hervorragend in der Oberfläche des Trägers (A) und/oder in der Oberfläche einer Carbide, Oxide und/oder Nitride enthaltenden Schicht (C) verankert werden, so daß es auch nach der Langzeitverwendung zu keiner Trennung der betreffenden Schichten kommt. Vor allem aber ist die neue Aufzeichnungsschicht (B) gegenüber der Lochfraßkorrosion deutlich stabiler als die magneto-optischen Aufzeichnungsschichten des Standes der Technik.

Beispiele 1 bis 4

Herstellung und anwendungstechnische Eigenschaften erfindungsgemäßer magneto-optischer Datenplatten

Als Träger (A) wurden acht 130 mm durchmessende, 1,2 mm dicke, mit Spurrillen versehene Polycarbonatscheiben durch Spritzgießen unter Reinraumbedingungen hergestellt.

Hiernach wurden unter Drehen der Polycarbonatscheiben (A) (4 Stück, Beispiele 1 bis 4) auf ihre mit Spurrillen versehene Seite im Falle der Beispiele 1 und 2 nach Variante I:

(I-1)    eine Oxide und/oder Nitride enthaltende Schicht (C) durch reaktive (Magnetron)-Kathodenzerstäubung,

(I-2)    die neue Aufzeichnungsschicht (B) durch

i) Aufbringen einer Lanthanid-Übergangsmetall-Legierungsschicht mittels Magnetronkathodenzerstäubung und durch

ii) Erzeugen einer Oberflächenzone mittels reaktiver Magnetronkathodenzerstäubung der Lanthanid-Übergangsmetall-Legierung in der Gegenwart von Kohlenstoff, Sauerstoff und/oder Stickstoff sowie

(I-3)    eine weitere Schicht (C) durch reaktive Magnetronkathodenzerstäubung;

und im Falle der Beispiele 3 und 4 nach Variante II:

(II-1)    eine Schicht (C) gemäß Variante I (Beispiele 1 und 2),

(II-2)    die neue Aufzeichnungsschicht (B) gemäß Variante I (Beispiele 1 und 2),

(II-3)    eine weitere Schicht (C) gemäß Variante I (Beispiele 1 und 2),

(II-4)    eine Reflektionsschicht (D) durch Magnetronkathodenzerstäubung und

(II-5)    eine dritte Schicht (C) gemäß Variante I (Beispiele 1 und 2)

aufgebracht.

Hierbei wurden die Verfahrensparameter so gewählt, daß sich die in der Tabelle 1 angegebenen Zusammensetzung der erfindungsgemäßen Datenplatten 1 bis 4 ergab (Beispiele 1 bis 4).

Ein derartiger Schichtaufbau, insbesondere nach den Beispielen 3 und 4 (Tabelle 1), ist auch in der EP-A-0 326 933 in Tabelle 1 dargestellt, wobei die Dicke der Schicht C dort niedriger ist.

Zur Überprüfung des Verfahrenserfolgs und zu analytischen Zwecken wurden weitere vier erfindungsgemäße Datenplatten unter jeweils exakt vergleichbaren Bedingungen hergestellt (Beispiele 1a bis 4a). Anhand dieser Datenplatten wurden der Aufbau und die Zusammensetzung der neuen Aufzeichnungsschichten (B) mittels üblicher und bekannter, z.T. materialabbauender Analysenmethoden wie chemische Elementaranalyse, Lichtmikroskopie, Rasterelektronenmikroskopie, Röntgenspektroskopie, Röntgenstreuung und -beugung, ESCA (Elektronenspektroskopie für die chemische Analyse) und Flammenphotometrie untersucht. Desweiteren wurde mit Hilfe der üblichen und bekannten zerstörungsfreien optischen und spektroskopischen Methoden sichergestellt, daß die jeweiligen Paare erfindungsgemäßer Datenplatten (Beispiele 1, 1a bis 4, 4a) jeweils miteinander identisch waren, so daß die anhand der Datenplatten 1a bis 4a ermittelten Ergebnisse in die Tabelle 1 miteinfließen konnten.

Die neuen Aufzeichnungsschichten (B) der erfindungsgemäßen Datenplatten der Beispiele 1 bis 4 wurden unmittelbar nach ihrer Herstellung senkrecht zu ihrer Oberfläche magnetisiert.

Anschließend wurden die Datenplatten während 48 Stunden bei 23 ± 2°C bei einem Luftdruck von 103 ± 3,5 kPa und bei einer relativen Luftfeuchtigkeit von 45 bis 55 % konditioniert.

Hiernach wurden die konditionierten Datenplatten mit Hilfe eines üblichen und bekannten Plattenlaufwerks unter exakt vergleichbaren Bedingungen mit Daten beschrieben. Hierzu verwendete man einen impulsmodulierten GaAlAs-Halbleiterlaser, welcher linear polarisiertes Licht der Wellenlänge $\lambda$ = 830 nm emittierte. Sowohl die Bitlänge, d.h. der Durchmesser der ummagnetisierten "spots", als auch der Bitabstand, d.h. der Abstand von "spot" zu "spot", lagen bei etwa 1 $\mu$m.

Für das Lesen der eingeschriebenen Daten über den Kerr-Effekt (Beispiele 1 und 2) oder über den Faraday-Effekt (Beispiele 3 und 4) verwendete man den GaAlAs-Halbleiterlaser in Dauerstrich-Betrieb mit einer Lichtleistung von kleiner als 1 mW. Die unkorrigierte Bitfehlerrate wurde in üblicher und bekannter Weise mittels eines Zeitintervallanalysators ("time interval analyzer", TIA) bestimmt. Die Datenplatten wurden zunächst unmittelbar nach dem Beschreiben gelesen (1. Lesen). Hiernach wurden die Datenplatten dem für magneto-optische Aufzeichnungsmaterialien typischen "beschleunigten Lebensdauertest" bei 60, 70 und 80°C bei einer relativen Luftfeuchtigkeit von 90 % unterworfen und danach erneut gelesen (2. Lesen). Aus den hierbei erhaltenen unkorrigierten Bitfehlerraten und aus der licht- und elektronenmikroskopischen Begutachtung der Aufzeichnungsschichten (B) der Datenplatten wurde deren Lebensdauer unter Normalbedingungen (30°C, 90 % relative Luftfeuchtigkeit) abgeschätzt. Die betreffenden Ergebnisse finden sich in der Tabelle 2.

Vergleichsversuche V1 und V2

Herstellung und anwendungstechnische Eigenschaften bekannter Aufzeichnungsmaterialien

Nach der bei den Beispielen 1 bis 4 angegebenen Vorschrift wurden zwei Datenplatten hergestellt, welche in Aufbau und Zusammensetzung den aus der DE-A-33 35 689 bekannten Proben A-2 und B-5 glichen. Der Aufbau der Vergleichsplatten wird in der Tabelle 1 dem Aufbau der erfindungsgemäßen Datenplatten gegenübergestellt.

Die bekannten Datenplatten wurden, wie bei den Beispielen 1 bis 4 angegeben, magnetisiert, mit Daten beschrieben, gelesen und getestet. Die dabei erhaltenen Versuchsergebnisse werden in der Tabelle 2 mit den Werten aus den Beispielen 1 bis 4 verglichen.

Der Vergleich zeigt, daß die Aufzeichnungsmaterialien bekannter Zusammensetzung den erfindungsgemäßen Aufzeichnungsmaterialien hinsichtlich der Lagerstabilität unterlegen waren, was sich an der deutlich erhöhten Bitfehlerrate der bekannten Aufzeichnungsmaterialien bemerkbar machte. Überdies trat bei den bekannten Aufzeichnungsmaterialien - im Gegensatz zu den erfindungsgemäßen - Lochfraßkorrosion auf.

Tabelle 1:

Aufbau und Zusammensetzung erfindungsgemäßer und nicht erfindungsgemäßer magneto-optischer Datenplatten

| Bei-spiel | erste Schicht (C) (nm) | Aufzeichnungsschicht (B) Legierung und Ge-samtdicke (nm) | Dicke (nm) | Oberflächenzone: Zusammensetzung Mol% C | O | N | Aufbau | zweite Schicht (C) (nm) | Reflek-tions-schicht (D) (nm) | dritte Schicht (C) (nm) |
|---|---|---|---|---|---|---|---|---|---|---|
| 1 | SiO (80) | TbDyFe (80) | (15) | 1 | 2,5 | 11 | gleichmäßige C/O/N-Vertei-lung; scharfer Übergang zur Schicht (C) | AlN (20)  $Al_2O_3$ (20)  $Si_3N_4$ (20) | - | - |
| 2 | SiO (80) | TbDyFe (90) | (18) | 1 | 3 | 12 | ungleichmäßige C/O/N-Ver-teilung: eine N-haltige Lage, eine O-haltige Lage, eine C- und eine N-haltige Lage, jeweils 6 nm dick; fließender Übergang zur Schicht (C) | AlN (40)  $Al_2O_3$ (20) | - | - |
| 3 | SiO (80) | TbDyFe (25) | ( 3) | 0 | 1 | 10 | ungleichmäßige O/N-Vertei-lung: O/N-Gehalt nimmt von der äußeren Grenzfläche aus kontinuierlich ab; fließen-der Übergang zur Schicht (C) | $Si_3N_4$ (100) | Al (300) | $Si_3N_4$/SiO (100) |
| 4 | SiO (80) | TbDyFe (20) | (2,5) | 0 | 1,3 | 9 | gleichmäßige O/N-Vertei-lung; scharfer Übergang zur Schicht (C) | $TiO_2$ (300) | Al (500) | $Ta_2O_5$ (300) |
| Vergleichs-versuche | | | | | | | | | | |
| V1 | SiO (80) | TbDyFe (60) | - | - | - | - | - | $TiO_2$ (200) | - | $Al_2O_3$ (300) |
| V2 | SiO (80) | TbDyFe (25) | - | - | - | - | - | $CeO_2$ (100) | Al (500) | CrN (300) |

EP 0 326 930 B1

Tabelle 2: Versuchsergebnisse

| Beispiel | Bitfehlerrate (unkorrigiert) | | Lebensdauer (geschätzt) (Jahre) | tritt Lochfraßkorrosion[a] bei dem beschleunigten Lebensdauertest ein? |
|---|---|---|---|---|
| | 1. Lesen | 2. Lesen | | |
| 1 | $< 10^{-5}$ | $< 10^{-5}$ | $> 15$ | nein |
| 2 | $< 10^{-5}$ | $< 10^{-5}$ | $> 15$ | nein |
| 3 | $10^{-5}$ | $10^{-5}$ | $15$ | nein |
| 4 | $10^{-5}$ | $10^{-5}$ | $> 15$ | nein |
| Vgl.-Vers. | | | | |
| V1 | $10^{-5}$ | $2 \cdot 10^{-4}$ | $10 - 11$ | ja |
| V2 | $10^{-5}$ | $6 \cdot 10^{-4}$ | $10 - 11$ | ja |

a) Untersuchungsmethode: Lichtmikroskopie und Rasterelektronenmikroskopie;

**Patentansprüche**

1. Flächenförmiges, mehrschichtiges magneto-optisches Aufzeichnungsmaterial mit
   (A) einem optisch transparenten dimensionsstabilen Träger und mit
   (B) einer thermisch veränderbaren, aus einer amorphen, reinen Lanthanid-Übergangsmetall-Legierung aufgebauten Aufzeichnungsschicht, welche - zumindest auf der dem Träger (A) abgewandten Seite - eine bis zu 20 nm dicke, neben den Bestandteilen der Lanthanid-Übergangsmetall-Legierung lediglich noch zwei der Elemente Kohlenstoff, Sauerstoff und Stickstoff enthaltende Oberflächenzone aufweist, dadurch gekennzeichnet, daß die Konzentration des Kohlenstoffs, Sauerstoffs und Stickstoffs in der oder den bis zu 20 nm dicken Oberflächenzone(n) der Aufzeichnungsschicht (B) von deren äußeren Grenzfläche(n) aus bis zu deren inneren Grenzfläche(n) hin einmal oder mehrmals zunächst abnimmt, dann wieder zunimmt, um anschließend wieder abzunehmen.

2. Flächenförmiges, mehrschichtiges magneto-optisches Aufzeichnungsmaterial nach Anspruch 1, dadurch gekennzeichnet, daß sich zwischen dem Träger (A) und der Aufzeichnungsschicht (B) eine Carbide, Oxide und/oder Nitride enthaltende Schicht (C) befindet.

3. Flächenförmiges, mehrschichtiges magneto-optisches Aufzeichnungsmaterial nach Anspruch 1 oder 2, dadurch gekennzeichnet, daß sich auf der dem Träger (A) abgewandten Seite der Aufzeichnungsschicht (B) eine Carbide, Oxide und/oder Nitride enthaltende Schicht (C) befindet.

4. Flächenförmiges, mehrschichtiges magneto-optisches Aufzeichnungsmaterial nach einem der Ansprüche 1 bis 3, dadurch gekennzeichnet, daß sich auf der dem Träger (A) abgewandten Oberfläche der Aufzeichnungsschicht (B) eine Reflexionsschicht (D) befindet.

5. Flächenförmiges, mehrschichtiges magneto-optisches Aufzeichnungsmaterial nach Anspruch 4, dadurch gekennzeichnet, daß sich auf der der Aufzeichnungsschicht (B) abgewandten Oberfläche der Reflexionsschicht (D) eine Carbide, Oxide und/oder Nitride enthaltende Schicht (C) befindet.

6. Flächenförmiges, mehrschichtiges magneto-optisches Aufzeichnungsmaterial nach einem der Ansprüche 1 bis 5, dadurch gekennzeichnet, daß die jeweilige Änderung der Kohlenstoff-, Sauerstoff- und Stickstoffkonzentration allmählich, d.h. fließend, unter Bildung separater Lagen erfolgt.

**7.** Flächenförmiges, mehrschichtiges magneto-optisches Aufzeichnungsmaterial nach Anspruch 6, dadurch gekennzeichnet, daß sauerstoffhaltige separate Lagen neben sauerstofffreien separaten Lagen vorliegen.

**8.** Flächenförmiges, mehrschichtiges magneto-optisches Aufzeichnungsmaterial nach Anspruch 7, dadurch gekennzeichnet, daß es sich bei den sauerstofffreien Lagen um kohlenstoff- und/oder stickstoffhaltige Lagen und/oder um Lanthanid-Übergangsmetall-Lagen handelt.

**9.** Verfahren zur Herstellung eines flächenförmigen, mehrschichtigen magneto-optischen Aufzeichnungsmaterials mit
    (A) einem optisch transparenten dimensionsstabilen Träger und mit
    (B) einer thermisch veränderbaren, aus einer amorphen, reinen Landthanid-Übergangsmetall-Legierung aufgebauten Aufzeichnungsschicht sowie gegebenenfalls mit
    (C) einer oder mehreren Carbide, Oxide und/oder Nitride enthaltenden Schicht und
    (D) einer Reflexionsschicht,
bei welchem man die Schicht (B) in der gewünschten Dicke sowie gegebenenfalls die Schichten (C) und (D) in der gewünschten Reihenfolge, Anzahl und Dicke und mit dem jeweils gewünschten inneren Aufbau über die Gasphase auf dem Träger (A) aufbringt, wonach man in der Aufzeichnungsschicht (B) eine definierte, senkrecht zu ihrer Oberfläche orientierte Magnetisierung induziert, dadurch gekennzeichnet, daß man bei der Herstellung der Aufzeichnungsschicht (B) oder nach dem Aufbringen der Lanthanid-Übergangsmetall-Legierungsschicht - zumindest auf der dem Träger (A) abgewandten Seite - eine bis zu 20 nm dicke, neben den Bestandteilen der Lanthanid-Übergangsmetall-Legierung lediglich noch zwei der Elemente Kohlenstoff, Sauerstoff und Stickstoff enthaltende Oberflächenzone erzeugt, in der die Konzentration des Kohlenstoffs, Sauerstoffs und Stickstoffs von deren äußerer Grenzfläche aus bis zu deren innerer Grenzfläche hin einmal oder mehrmals zunächst abnimmt, dann wieder zunimmt, um anschließend wieder abzunehmen.

**10.** Verfahren zur Herstellung eines flächenförmigen, mehrschichtigen magneto-optischen Aufzeichnungsmaterials nach Anspruch 9, dadurch gekennzeichnet, daß man hierbei die Oberflächenzone, welche dem Träger (A) abgewandt ist, bei der Herstellung der Aufzeichnungsschicht (B) durch das Aufbringen der Lanthanid-Übergangsmetall-Legierung in der Gegenwart von zwei der Elemente Kohlenstoff, Sauerstoff und Stickstoff erzeugt.

**11.** Verfahren zur Herstellung eines flächenförmigen, mehrschichtigen magneto-optischen Aufzeichnungsmaterials nach Anspruch 9, dadurch gekennzeichnet, daß man hierbei die Oberflächenzone, welche dem Träger (A) abgewandt ist, nach dem Aufbringen der Lanthanid-Übergangsmetall-Legierung durch partielle oder vollständige Umsetzung einer bis zu 20 nm dicken Oberflächenzone der Lanthanid-Übergangsmetall-Legierungsschicht mit zwei der Elemente Kohlenstoff, Sauerstoff und Stickstoff erzeugt.

**12.** Verfahren zur Herstellung eines flächenförmigen, mehrschichtigen magneto-optischen Aufzeichnungsmaterials nach einem der Ansprüche 9 bis 11, dadurch gekennzeichnet, daß man hierbei zunächst die Oberflächenzone, welche dem Träger (A) zugewandt ist, durch
    i) Aufbringen einer bis zu 20 nm dicken Schicht aus einer Lanthanid-Übergangsmetall-Legierung in der Gegenwart von zwei der Elemente Kohlenstoff, Sauerstoff und Stickstoff
    oder durch
    ii) Aufbringen einer bis zu 20 nm dicken Schicht aus einer Lanthanid-Übergangsmetall-Legierung und deren nachträgliche, partielle oder vollständige Umsetzung mit zwei der Elemente Kohlenstoff, Sauerstoff und Stickstoff
auf dem Träger (A) oder auf einer dem Träger (A) aufliegenden Schicht (C) erzeugt, wonach man im weiteren eine reine Lanthanid-Übergangsmetall-Legierung aufbringt.

## Claims

**1.** A sheet-like, multilayer magneto-optical recording material comprising
    (A) an optically transparent dimensionally stable substrate and
    (B) a thermally alterable recording layer which is composed of an amorphous, pure lanthanide/transition metal alloy and has, at least on the side facing away from the substrate (A), an up to 20 nm thick surface zone containing only two of the elements carbon, oxygen and nitrogen in addition to the components of the lanthanide/transition metal alloy, wherein the concentration of the carbon, oxygen and nitrogen in the up to 20 nm thick surface zone or zones of the recording layer (B), initially decreases, then increases and decreases again, one or more times, from the outer interface or interfaces thereof to the inner interface or interfaces thereof.

2. A sheet-like, multilayer magneto-optical recording material as claimed in claim 1, wherein a layer (C) containing carbides, oxides and/or nitrides is present between the substrate (A) and the recording layer (B).

3. A sheet-like, multilayer magneto-optical recording material as claimed in claim 1 or 2, wherein a layer (C) containing carbides, oxides and/or nitrides is present on that side of the recording layer (B) which faces away from the substrate (A).

4. A sheet-like, multilayer magneto-optical recording material as claimed in any of claims 1 to 3, wherein a reflective layer (D) is present on that surface of the recording layer (B) which faces away from the substrate (A).

5. A sheet-like, multilayer magneto-optical recording material as claimed in claim 4, wherein a layer (C) containing carbides, oxides and/or nitrides is present on that surface of the reflective layer (D) which faces away from the recording layer (B).

6. A sheet-like, multilayer magneto-optical recording material as claimed in any of claims 1 to 5, wherein the respective change in the carbon, oxygen and nitrogen concentration occurs gradually, ie. continuously, with formation of separate strata.

7. A sheet-like, multilayer magneto-optical recording layer as claimed in claim 6, wherein oxygen-containing separate strata are present in addition to oxygen-free separate strata.

8. A sheet-like, multilayer magneto-optical recording layer as claimed in claim 7, wherein the oxygen-free strata are carbon-containing and/or nitrogen-containing strata and/or lanthanide/transition metal strata.

9. A process for the production of a sheet-like, multilayer magneto-optical recording material comprising
   (A) an optically transparent dimensionally stable substrate and
   (B) a thermally alterable recording layer composed of an amorphous, pure lanthanide/transition metal alloy and, if required,
   (C) one or more layers containing carbides, oxides and/or nitrides and
   (D) a reflective layer,
   in which the layer (B), in the desired thickness, and, if required, the layers (C) and (D), in the desired order, number and thickness and with the particular desired internal composition, are applied to the substrate (A) from the gas phase, after which a defined magnetization oriented at right angles to the surface of the recording layer (B) is induced in said layer, wherein, during the production of the recording layer (B) or after the application of the lanthanide/transition metal alloy layer, an up to 20 nm thick surface zone which contains only two of the elements carbon, oxygen and nitrogen in addition to the components of the lanthanide/transition metal alloy and in which the concentration of the carbon, oxygen and nitrogen initially decreases, then increases and decreases again, one or more times, from the outer interface thereof to the inner interface thereof, is produced at least on the side facing away from the substrate (A).

10. A process for the production of a sheet-like, multilayer magneto-optical recording material as claimed in claim 9, wherein the surface zone which faces away from the substrate (A) is produced during the production of the recording layer (B) by applying the lanthanide/transition metal alloy in the presence of two of the elements carbon, oxygen and nitrogen.

11. A process for the production of a sheet-like, multilayer magneto-optical recording material as claimed in claim 9, wherein the surface zone which faces away from the substrate (A) is produced, after application of the lanthanide/transition metal alloy, by partial or complete reaction of an up to 20 nm thick surface zone of the lanthanide/transition metal alloy layer with two of the elements carbon, oxygen and nitrogen.

**12.** A process for the production of a sheet-like, multilayer magneto-optical recording material as claimed in any of claims 9 to 11, wherein the surface zone which faces away from the substrate (A) is first produced on the substrate (A) or on a layer (C) present on the substrate (A) by
    i) applying an up to 20 nm thick layer of a lanthanide/transition metal alloy in the presence of two of the elements carbon, oxygen and nitrogen or by
    ii) applying an up to 20 nm thick layer of a lanthanide/transition metal alloy and subsequently reacting said alloy partially or completely with two of the elements carbon, oxygen and nitrogen,
after which a pure lanthanide/transition metal alloy is subsequently applied.

**Revendications**

**1.** Support d'enregistrement magnéto-optique multicouche plat comprenant
    (A) un substrat transparent de dimensions stables et
    (B) une couche d'enregistrement modifiable thermiquement constituée d'un alliage amorphe pur de lanthanides et de métaux de transition qui, au moins sur sa face opposée au substrat (A), présente une zone superficielle d'au plus 20 nm d'épaisseur contenant, en plus des éléments de l'alliage de lanthanides et de métaux de transition, seulement deux des éléments carbone, oxygène et azote, caractérisé par le fait que la concentration de carbone, d'oxygène et d'azote dans la ou les zones superficielles d'au plus 20 nm d'épaisseur de la couche d'enregistrement (B), depuis leur surface limite extérieure jusqu'à leur surface limite intérieure, une ou plusieurs fois, d'abord décroît, puis croît pour ensuite de nouveau décroître.

**2.** Support d'enregistrement magnéto-optique multicouche plat selon la revendication 1, caractérisé par le fait qu'entre le substrat (A) et la couche d'enregistrement (B) se trouve une couche (C) contenant des carbures, des oxydes et/ou des nitrures.

**3.** Support d'enregistrement magnéto-optique multicouche plat selon l'une des revendications 1 et 2, caractérisé par le fait que sur la face de la couche d'enregistrement (B) opposée au substrat (A) se trouve une couche (C) contenant des carbures, des oxydes et/ou des nitrures.

**4.** Support d'enregistrement magnéto-optique multicouche plat selon l'une des revendications 1 à 3, caractérisé par le fait que sur la surface de la couche d'enregistrement (B) opposée au substrat (A) se trouve une couche réfléchissante (D).

**5.** Support d'enregistrement magnéto-optique multicouche plat selon la revendication 4, caractérisé par le fait que sur la surface de la couche réfléchissante (D) opposée à la couche d'enregistrement (B) se trouve une couche (C) contenant des carbures, des oxydes et/ou des nitrures.

**6.** Support d'enregistrement magnéto-optique multicouche plat selon l'une des revendications 1 à 5, caractérisé par le fait que la variation des concentrations de carbone, d'oxygène et d'azote est progressive, c'est-à-dire coulante, avec formation de strates séparées.

**7.** Support d'enregistrement magnéto-optique multicouche plat selon la revendication 6, caractérisé par le fait que des strates séparées contenant de l'oxygène sont présentes à côté de strates séparées n'en contenant pas.

**8.** Support d'enregistrement magnéto-optique multicouche plat selon la revendication 7, caractérisé par le fait que les strates ne contenant pas d'oxygène sont des strates contenant du carbone et/ou de l'azote et/ou des strates de lanthanides et de métaux de transition.

**9.** Procédé de fabrication d'un support d'enregistrement magnéto-optique multicouche plat comprenant
    (A) un substrat transparent de dimensions stables,
    (B) une couche d'enregistrement modifiable thermiquement constituée d'un alliage amorphe pur de lanthanides et de métaux de transition, et éventuellement
    (C) une ou plusieurs couches contenant des carbures, des oxydes et/ou des nitrures et

(D) une couche réfléchissante,

dans lequel on applique en phase gazeuse sur le substrat (A) la couche (B) en l'épaisseur désirée et éventuellement les couches (B) et (C) dans l'ordre et en le nombre et l'épaisseur désirés et avec la structure interne désirée, après quoi on produit dans la couche d'enregistrement (B) une aimantation déterminée orientée perpendiculairement à sa surface, caractérisé par le fait que lors de la production de la couche d'enregistrement (B) ou après l'application de la couche d'alliage de lanthanides et de métaux de transition, on produit, au moins sur la face opposée au substrat (A), une zone superficielle d'au plus 20 nm d'épaisseur contenant, en plus des éléments de l'alliage de lanthanides et de métaux de transition, seulement deux des éléments carbone, oxygène et azote et dans laquelle la concentration de carbone, d'oxygène et d'azote, depuis sa surface limite extérieure jusqu'à sa surface limite intérieure, une ou plusieurs fois, d'abord décroît, puis croît pour ensuite de nouveau décroître.

10. Procédé de fabrication d'un support d'enregistrement magnéto-optique multicouche plat selon la revendication 9, caractérisé par le fait qu'on y produit la zone superficielle opposée au substrat (A) lors de la production de la couche d'enregistrement (B) en appliquant l'alliage de lanthanides et de métaux de transition en présence de deux des éléments carbone, oxygène et azote.

11. Procédé de fabrication d'un support d'enregistrement magnéto-optique multicouche plat selon la revendication 9, caractérisé par le fait qu'on y produit la zone superficielle opposée au substrat (A) après l'application de l'alliage de lanthanides et de métaux de transition par transformation partielle ou totale d'une zone superficielle d'au plus 20 nm d'épaisseur de la couche d'alliage de lanthanides et de métaux de transition avec deux des éléments carbone, oxygène et azote.

12. Procédé de fabrication d'un support d'enregistrement magnéto-optique multicouche plat selon l'une des revendications 9 à 11, caractérisé par le fait qu'on y produit d'abord la zone superficielle dirigée vers le substrat (A) par

i) application d'une couche d'au plus 20 nm d'épaisseur d'un alliage de lanthanides et de métaux de transition en présence de deux des éléments carbone, oxygène et azote, ou par

ii) application d'une couche d'au plus 20 nm d'épaisseur d'un alliage de lanthanides et de métaux de transition et ensuite transformation partielle ou totale de celle-ci avec deux des éléments carbone, oxygène et azote sur le substrat (A) ou sur une couche (C) située sur celui-ci, après quoi on applique un alliage de lanthanides et de métaux de transition pur.